# EUROPEAN PATENT SPECIFICATION

(11) **EP 3 259 947 B1**
(45) Date of publication and mention of the grant of the patent: **19.05.2021**
(21) Application number: 15882307.0
(22) Date of filing: 16.02.2015
(51) Int. Cl.: H04W 72/04, H04W 52/02, H04W 72/08, H04W 72/12

(54) **NODES AND METHODS THEREIN FOR TRANSMISSION RESOURCES ALLOCATION IN A WIRELESS COMMUNICATIONS NETWORK**
SYSTEME UND VERFAHREN DARIN ZUR ÜBERTRAGUNGSRESSOURCENZUWEISUNG IN EINEM DRAHTLOSKOMMUNIKATIONSSYSTEM
NOEUDS ET PROCÉDÉS LEUR PERMETTANT DE TRANSMETTRE UNE ALLOCATION DE RESSOURCES DANS UN RÉSEAU DE COMMUNICATION SANS FIL

(43) Date of publication of application: 27.12.2017
(73) Proprietor: Telefonaktiebolaget LM Ericsson (publ), 164 83 Stockholm (SE)
(72) Inventor: LU, Qianxi, Beijing 100102 (CN); FAN, Rui, Beijing 100102 (CN)
(74) Representative: Zacco Sweden AB
(86) International application number: PCT/CN2015/073164
(87) International publication number: WO 2016/131167

(56) References cited:
- WO-A1-2010/057521
- WO-A2-2010/003098
- CN-A- 101 895 987
- CN-A- 102 474 867
- CN-A- 102 573 074
- US-A1- 2013 021 932
- US-A1- 2013 286 848

## Description

### TECHNICAL FIELD

Embodiments herein relate to transmission resource allocation in a wireless communications network. In particular, embodiments herein relate to a first node and method therein for allocating a subset of transmission resources that are shared between an access link and a back-haul link. In particular, embodiments not according to the invention and present for illustration purposes only herein also relate to a third node and method therein for determining a number of subsets of transmission resources used by a first access link to at least one first node in a wireless communications network.

### BACKGROUND

In a typical wireless, cellular or radio communications network, wireless devices, also known as mobile stations, terminals, and/or User Equipment, UEs, communicate via a Radio-Access Network, RAN. The RAN covers a geographical area which is divided into cells, with each cell being served by a base station, e.g. a radio base station, RBS, or network node, which in some networks may also be called, for example, a "NodeB", "eNodeB" or "eNB". A cell is a geographical area where radio coverage is provided by the radio base station at a base station site or an antenna site in case the antenna and the radio base station are not collocated. One radio base station may serve one or more cells.

A Universal Mobile Telecommunications System, UMTS, is a third generation mobile communication system, which evolved from the second generation, 2G, Global System for Mobile Communications, GSM. The UMTS terrestrial radio-access network, UTRAN, is essentially a RAN using wideband code-division multiple access, WCDMA, and/or High-Speed Packet Access, HSPA, to communicate with user equipment. In a forum known as the Third Generation Partnership Project, 3GPP, telecommunications suppliers propose and agree upon standards for third generation networks and UTRAN specifically, and investigate enhanced data rate and radio capacity. In some versions of the RAN, as e.g. in UMTS, several base stations may be connected, e.g., by landlines or microwave, to a controller node, such as a radio network controller, RNC, or a base station controller, BSC, which supervises and coordinates various activities of the plural base stations connected thereto. The RNCs are typically connected to one or more core networks.

Specifications for the Evolved Packet System, EPS, have been completed within the 3^{rd} Generation Partnership Project, 3GPP, and this work continues in the coming 3GPP releases. The EPS comprises the Evolved Universal Terrestrial Radio-Access Network, E-UTRAN, also known as the Long-Term Evolution, LTE, radio access, and the Evolved Packet Core, EPC, also known as System Architecture Evolution, SAE, core network. E-UTRAN/LTE is a variant of a 3GPP radio-access technology wherein the radio base station nodes are directly connected to the EPC core network rather than to RNCs. In general, in E-UTRAN/LTE the functions of a RNC are distributed between the radio base station nodes, e.g. eNodeBs in LTE, and the core network. As such, the Radio-Access Network, RAN, of an EPS has an essentially flat architecture comprising radio base station nodes without reporting to RNCs.

With the ever increasing demands on larger traffic volumes and/or lower latencies, wireless communications networks and their capacity needs to be continuously evolved and developed. One way of increasing the capacity and coverage in a wireless communications network is to densify the wireless communications network, i.e. providing more access points or network nodes in the wireless communications network. Another way is to allow the wireless communications network to use more of the available frequency spectrum. For the latter, however, due to scarcity available frequency spectrum, the available frequency spectrum for wireless communications networks in the future may probably be in the high frequency range, such as, e.g. from 10Ghz and above.

Because of the increased densification of wireless communications networks and possibly available wide spectrums at high frequencies, self-backhauling is a very interesting feature to consider. In self-backhauling, the backhaul to the core network in the wireless communications networks is not based on fixed link, such as, e.g. fibre optics or copper wired links, but instead based on Radio Access Technology, RAT, employed by the wireless communications networks themselves. Furthermore, the wireless communications networks employing self-backhaul are also not limited to a single-hop of a backhaul link, but could also provide for multi-hop backhaul links which further extend the backhaul link coverage. One of the advantages of using wireless communications networks that employ multi-hop self-backhauling is that it simplifies the deployment of dense wireless communications networks.

One example of an existing wireless communications network using self-backhaul is LTE. In Release 10 of the 3GPP standard for LTE, a feature referred to as LTE Relay is defined which employs self-backhaul. In LTE Relay, divided and separate resource pools of transmission resources are used for the backhaul link, i.e. the radio link between a network node connected to the core network and the LTE Relay node, and the access link, i.e. the radio link between the LTE Relay node and the wireless device being served by the LTE Relay node, respectively. This may be performed in order to avoid self-transmission-to-reception interference. The division of the separate transmission resource pools is controlled by the network node that is connected to the core network, also commonly referred to as the donor node, via Radio Resource Control, RRC, signalling. After receiving the division of the separate resource pools from the donor node, the LTE Relay node will monitor downlink, DL, subframes in the transmission resource pool of the backhaul link, and the wireless device will monitor the DL subframes in the transmission resource pool of the access link. However, the LTE Relay does not provide for more than a single-hop of self-backhaul, i.e. as described above. In future wireless communication networks, the uplink and downlink subframe direction should also preferably be dynamic and flexible, rather than fixed as in LTE Relay, to be able to meet instantaneous traffic demands in the wireless communications network. A more dynamic and flexible transmission resource allocation between the backhaul link and the access link than in the LTE Relay may also be needed to be able to meet instantaneous traffic demands in the wireless communications network.

Despite the above limitations of the LTE Relay, it should be noted that one of the most important issues to solve in future wireless communications network using self-backhaul is to avoid self-transmission-to-reception interference. This issue will probably be more complicated than in LTE relay, as the requirement on self-backhaul in future wireless communications network probably will be higher than the requirements in LTE Relay.

The methods used in LTE Relay in order to avoid self-transmission-to-reception interference are not suitable to be applied in future wireless communications network using self-backhaul. For example, in an LTE-based wireless communications network, there are only a limited number of alternatives for transmission resource division for the backhaul link and access link. This is because the conventional LTE-based wireless communications network comprises some strict timing relationships. For example, in LTE there exists a strict timing relationship in Hybrid Automatic Repeat Request, HARQ, procedure which determine the timing of new transmissions, Acknowledgement and Non-Acknowledgement, A/N, transmissions, and re-transmissions. There is also limited uplink
and downlink, UL/DL, configurations and a strict timing relationship UL grants and UL data transmissions timing relationship in LTE TDD networks, which causes limited alternatives for the transmission resource division for the backhaul link and access link. Furthermore, these strict timing relationships may or may not be used in the future wireless communications network using self-backhaul. For example, it may be that no timing restrictions are specified for the HARQ procedure, e.g. no strict timing relationship between new transmissions, A/N, transmissions, and re-transmissions. Also, no timing restrictions may be specified UL grants and UL data transmissions, for example, DL assignments may be assumed in same subframe as data, e.g. multi-subframe grants may be assumed in the UL to handle heavy UL traffic. Here, for example, each UL grant may cover up to 25 subframes. According to another example, in order to change the transmission resource allocation for the backhaul link, i.e. the transmission resource pool of the backhaul link, both RRC signaling from donor node to the LTE Relay node to change the resource division and signaling from LTE Relay node to the wireless device to change the MBSFN configuration is required. According to a further example, there is no differentiation made in LTE Relay for the wireless device between the transmission resource pool of the access link and the transmission resource pool of the backhaul link. This may cause a waste of power for the transmission resource pool of the backhaul link.

WO 2010/003098 A2 describes a method and a system that facilitates providing opportunistic relay node communication based on scheduling of other communications in a wireless network. Further, WO 2010/057521 A1 describes a method for providing a communication link between a station of an access system and a relay node. Furthermore, US 2013/0021932 A1 describes a method for subframe muting and/or discontinuous reception mode related to sleep mode for user equipment relays. Furthermore, US 2013/286848 A1 describes a method performed by a low power node (LPN) in a densely deployed network.

### SUMMARY

It is an object of embodiments herein to improve the sharing of transmission resources in a wireless communications network.

According to a first aspect of embodiments herein, the object is achieved by a method performed by first node in a wireless communications network for allocating a subset of transmission resources that are shared between an access link and a back-haul link. The first node determines whether or not transmissions are scheduled for the subset of transmission resources on the back-haul link. The determination is continuously performed at determined time periods according to a Discontinuous Reception, DRX, timer coupled to the subset of transmission resources in the first node. Also, the network node allocates the subset of transmission resources to the back-haul link when transmissions are scheduled for the subset of transmission resources on the back-haul link. Further, the network node allocates the subset of transmission resources to the access link when transmissions are not scheduled for the subset of transmission resources on the back-haul link.

According to a second aspect of embodiments herein, the object is achieved by a first node in a wireless communications network for allocating a subset of transmission resources that are shared between an access link and a back-haul link. The first node comprises a processor configured to determine whether or not transmissions are scheduled for the subset of transmission resources on the back-haul link, where the determination is continuously performed at determined time periods according to a Discontinuous Reception, DRX, timer coupled to the subset of transmission resources in the first node. The processor is also configured to allocate the subset of transmission resources to the back-haul link when transmissions are scheduled for the subset of transmission resources on the back-haul link. The processor is further configured to allocate the subset of transmission resources to the access link when transmissions are not scheduled for the subset of transmission resources on the backhaul link.

According to a first aspect of embodiments not according to the invention and present for illustration purposes only herein, the object is achieved by a method performed by a third node for determining a number of subsets of transmission resources used by a first access link to at least one first node in a wireless communications network. The transmission resources in the wireless communications network is shared between the first access link and at least one second access link of the at least one first node. The third node receives, from the at least one first node, a transmission buffer status indication for pending transmissions from the at least one first node on the at least one second access link. The third node also determines the number of subsets of transmission resources that is to be used by the first access link to the at least one first node based on the received transmission buffer status indication.

According to a second aspect of embodiments not according to the invention and present for illustration purposes only herein, the object is achieved by a third node for determining a number of subsets of transmission resources used by a first access link to at least one first node in a wireless communications network. The transmission resources in the wireless communications network is shared between the first access link and at least one second access link of the at least one first node (110). The third node comprises a receiver configured to receive, from the at least one first node, a transmission buffer status indication for pending transmissions from the at least one first node on the at least one second access link. The third node also comprises a processor configured to determine the number of subsets of transmission resources that is to be used by the first access link to the at least one first node based on the received transmission buffer status indication.

According to a third aspect of embodiments herein, the object is achieved by a computer program, comprising instructions which, when executed on at least one processor, cause the at least one processor to carry out the method described in the first embodiment.

According to a third aspect of embodiments not according to the invention and present for illustration purposes only herein, the object is achieved by a carrier containing the computer program described above, wherein the carrier is one of an electronic signal, optical signal, radio signal, or computer readable storage medium.

By allocating the subset of transmission resources to the backhaul link when there are transmissions scheduled for the backhaul link on the subset of transmission resources and by allocating the subset of transmission resources to the access link when there are no transmissions scheduled for the backhaul link on the subset of transmission resources, the first node is able to dynamically switch resource allocation of the subset of transmission resources between the backhaul link and the access link in accordance with traffic demand. Hence, the sharing of transmission resources in a wireless communications network is improved.

### BRIEF DESCRIPTION OF THE DRAWINGS

Features and advantages of the embodiments will become readily apparent to those skilled in the art by the following detailed description of exemplary embodiments thereof with reference to the accompanying drawings, wherein:
- Figure 1: is a schematic block diagram illustrating embodiments of a first node and a third node in a wireless communications network,
- Figure 2: is a schematic illustration of a Discontinuous Reception, DRX, procedure,
- Figure 3: is a flowchart depicting embodiments of a method in a first node,
- Figure 4: is a schematic illustration of an example of division of transmission resources according to embodiments of a method in a first node,
- Figure 5: is a schematic illustration of an example of a DRX procedure according to embodiments of a method in a first node,
- Figure 6: is a schematic illustration of embodiments of a first node and a third node in a wireless communications network,
- Figure 7: is a flowchart depicting embodiments of a method in a third node,
- Figure 8: is a schematic block diagram depicting embodiments of a first node, and
- Figure 9: is a schematic block diagram depicting embodiments of a third node.

### DETAILED DESCRIPTION

The figures are schematic and simplified for clarity, and they merely show details which are essential to the understanding of the embodiments presented herein, while other details have been left out. Throughout, the same reference numerals are used for identical or corresponding parts or steps.

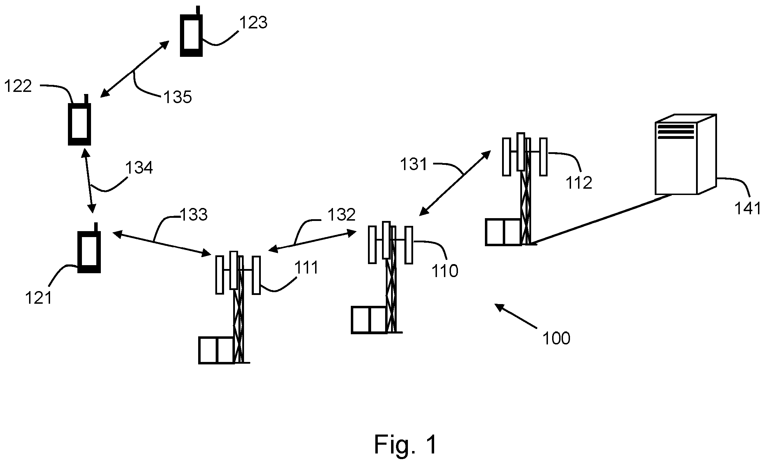

**Figure 1** shows an example of a wireless communications network 100 in which embodiments herein may be implemented. Although illustrated in Figure 1 as an LTE network, the wireless communications network 100 may be any wireless or radio communication system, such as, LTE-Advanced, Wideband Code-Division Multiple Access (WCDMA), Global System for Mobile communications/Enhanced Data rate for GSM Evolution (GSM/EDGE), Worldwide Interoperability for Microwave Access (WiMax), Ultra Mobile Broadband (UMB) or GSM network, or other cellular network or system.

The wireless communications system 100 comprises **a first network node 110, a second network node 111** and **a third network node 112.** The first, second and third network nodes 110 may e.g. be an eNB, eNodeB, or a Home Node B, a Home eNode B, femto Base Station (BS), pico BS or any other network unit capable to serve a wireless device in the wireless communications system 100. The first, second and third network nodes 110 may also be e.g. a radio base station, a base station controller, a network controller, a relay node, a repeater, an access point, a radio-access point, a Remote Radio Unit (RRU) or a Remote Radio Head (RRH). Furthermore, first, second and third network nodes 110 each may comprise multiple antennas for wireless radio communication with other node or wireless devices located within their coverage range; that is, the first, second and third network nodes 110 may each use one or more of its antennas to provide radio coverage within its cell.

The wireless communications system 100 also comprises **a first wireless device 121, a second wireless device 122** and **a third wireless device 123.** The first, second and third wireless device 121, 122, 123 may e.g. be any kind of wireless device such as a mobile phone, a cellular phone, a Personal Digital Assistant (PDA), a smart phone, a tablet, a sensor or actuator with wireless communication capabilities, a sensor or actuator connected to or equipped with a wireless device, a Machine Device (MD), a Machine-Type-Communication (MTC) device, a Machine-to-Machine (M2M) communication device, D2D capability, a wireless device with D2D capability, a Customer-Premises Equipment (CPE), a Laptop-Mounted Equipment (LME), a Laptop-Embedded Equipment (LEE), etc.

In the wireless communication network 100 in Figure 1, the first network node 110 may be served the third network node 112 and thus provided with a backhaul link 131 to the third network node 112. In this way, the first network node 110 is provided access, via the third network node 112, to a core network node 141 in the wireless communication network 110. This is performed while the first network node 110 serves the second network node 111 and thus provides the second network node 111 with an access link 132 to the first network node 110. Hence, the second network node 111 is provided access to the core network node 141 in the wireless communication network 110 via the backhaul link 131 of the first network node 110 to the third network node 112. Thus, the wireless communications network 100 may be referred to as a self-backhaul network. Also, the first network node 110 may thus also be referred to as a self-backhaul node.

As further illustrated in the wireless communication network 100 in Figure 1, this type of self-backhaul network may comprise several consecutive self-backhaul nodes. For example, the second network node 111 may use the access link 132 to the first network node 11 as a back-haul link, and provide an access link 133 to the first wireless device 121. In turn, the first wireless device 121 may use the access link 133 to the second network node 111 as a back-haul link, and provide an access link 134 to a second wireless device 122. Also, in case the second wireless device 122 also is a self-backhaul node, the second wireless device 122 may use the access link 134 to the first wireless device 121 as a back-haul link, and provide an access link 135 to a third wireless device 123. Hence, the third wireless device 123 may be provided access to a core network node 141 in the wireless communication network 100 via a multi-hop system of self-backhaul node, i.e. via the second wireless device 122 to the first wireless device 121 to the second network node 111 to the first network node 110 to the third network node 112 to the core network node 141. Thus, the wireless communications network 100 in Figure 1 may be referred to as a multi-hop self-backhaul network.

As noted above, in the wireless communication network 100 in Figure 1, the first and second wireless devices 121, 122 and first and second network nodes 110, 111 are capable of operating as self-backhaul nodes. A self-backhaul node will hereinafter be referred to as a first node.

Furthermore, although embodiments below are described with reference to the scenario of Figure 1, and the first node exemplified as either the first wireless device 121 or the first network node 110, this scenario should not be construed as limiting to the embodiments herein, but merely as an example made for illustrative purposes.

As part of developing the embodiments herein, it has been noticed that there is a need for a more dynamic sharing of transmission resources between the access link and the backhaul link in multi-hop self-backhaul network. In accordance with the embodiments described herein, this is addressed by allocating a subset of transmission resources to the backhaul link when there are transmissions scheduled for the backhaul link, and by allocating the subset of transmission resources to the access link when there are no transmissions scheduled for the backhaul link. This enables the first node to dynamically switch the transmission resource allocation of the subset of transmission resources between the backhaul link and the access link in accordance with the instantaneous traffic demand. Hence, a more dynamic sharing of transmission resources in a wireless communications network is provided.

It has also been noticed that the dynamic sharing of transmission resources should also assume that the nodes in the wireless communication network are configured according to the conventional scheduling behaviour of LTE. In the 3GPP standard specifications for LTE, such as, 3GPP TS 36.331 E-UTRA - Radio Resource Control (RRC) and 3GPP TS 36.321 E-UTRA - Medium Access Control (MAC), procedures for Discontinuous Reception, DRX, are specified. The DRX procedures are used to enable power savings in wireless devices and conserve their battery power. The DRX procedures allows wireless devices to disable its receiver for long and reoccurring periods of time, and only discontinuously monitor the downlink channels during short and reoccurring time periods.

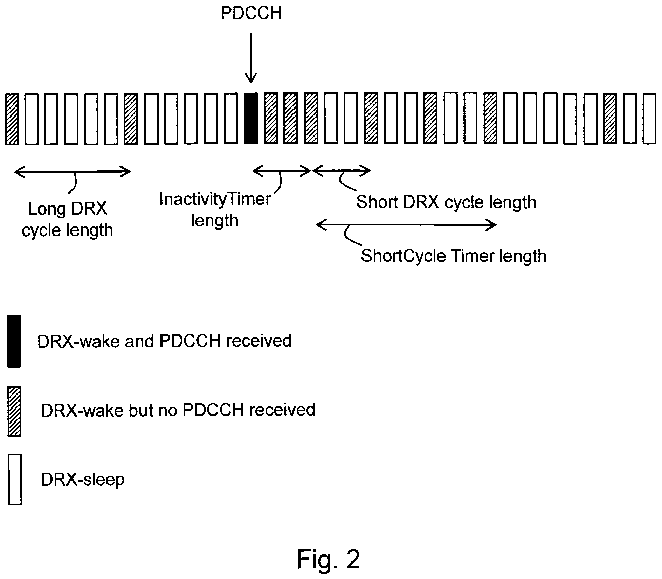

An example of a procedure for Discontinuous Reception, DRX, in E-UTRAN is shown in **Figure 2****.** Here, a wireless device may switch on its receiver and monitor the control channel, e.g. Physical Downlink Control Channel, PDCCH, during a short on-duration time period, e.g. according to an DRX OnDurationTimer. The DRX OnDurationTimer may, for example, be the duration of one subframe as shown in the example of Figure 2. If a data transfer does not occur during such the on-duration time period, the wireless device may turn off its receiver and enter a low energy state, e.g. DRX sleep, for a long period of time, e.g. according to a long DRX cycle length as shown in Figure 2. Otherwise, if a data transfer does occur during the on-duration time period, the wireless device starts an DRX InactivityTimer and a DRX shortCycleTimer. This extends the active time of the receiver in the wireless device as illustrated in Figure 2. This means that the wireless device may or may not experience possible transmissions during its short on-duration time periods, which may be followed by a possible period of DRX inactivity, i.e. active time of the receiver in the wireless device.

Furthermore, the length of the on-duration time period and its periodicity, i.e. according to the long DRX cycle, are set and fixed by the RRC configuration of the wireless device. This is also true for the length of the short DRX cycle, the length of the inactivityTimer, and the length of the shortCycleTimer as shown in Figure 2. However, the active time of the receiver may be of varying lengths and may change instantaneously based on scheduling decisions.

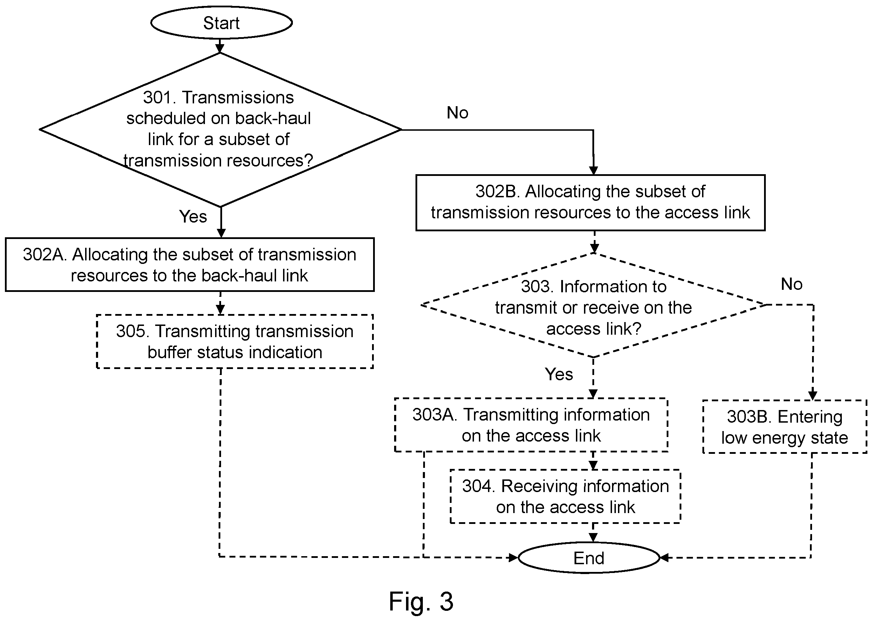

Example of embodiments of a method performed by a first node 110, 121 in a wireless communications network 100 for allocating a subset of transmission resources that are shared between an access link 132, 134 and a back-haul link 131, 133, will now be described with reference to the flowchart depicted in Figure 3. It should be noted that, according to some embodiments, the access link 132, 134 is used by the first node 110, 121 to provide access to the wireless communications network 100 to at least one second node 111, 122. Also, the back-haul link 131, 133 is used by the first node 110, 121 to access the wireless communications network 100 via a third node 112, 111. Also, in some embodiments, the transmission resources may be subframes or time-slots in the wireless communications network 100. **Figure 3** illustrates an example of actions or operations which may be taken by the first node 110, 121. The method may comprise the following actions.

### Action 301

First, the first node 110, 121 may determine whether or not transmissions are scheduled for the subset of transmission resources on the back-haul link 131, 133. This means that the first node 110, 121 may detect if there is any activity on the subset of transmission resources by the third node 112, 111 for the back-haul link 131, 133, such as, e.g. downlink, DL, data or uplink, UL, grant.

According to some embodiments, this may be continuously performed by the first node 110, 121 at determined time periods according to a Discontinuous Reception, DRX, timer coupled to the subset of transmission resources in the first node 110, 121. This means that the subset of transmission resources in the first node 110, 121 may have its own DRX procedure where during short on-duration time periods, e.g. according to a DRX OnDurationTimer, the first node 110, 121 may detect if there is any activity on the subset of transmission resources by the third node 112, 111 for the back-haul link 131, 133, such as, e.g. downlink, DL, data or uplink, UL, grant. This advantageously enables the first node 110, 121 to use discontinuous reception, DRX, as a means to detect whether or not the third node 112, 111 is currently using the subset of transmission resources for the back-haul link 131, 133. A further advantage of using the capabilities of performing discontinuous reception, DRX, for each subset of transmission resources in the first node 110, 121, is that no new or explicit signalling is needed for the dynamic transmission resource allocation.

Furthermore, the subset of transmission resources may be one of at least two subsets of transmission resources comprised in a set of transmission resources shared between the access link 132, 134 and the back-haul link 131, 133. This means that the at least one subset of transmission resources may be said to form a communication thread in which downlink and/or uplink transmission grant information is communicated and corresponding downlink and/or uplink transmissions is performed.

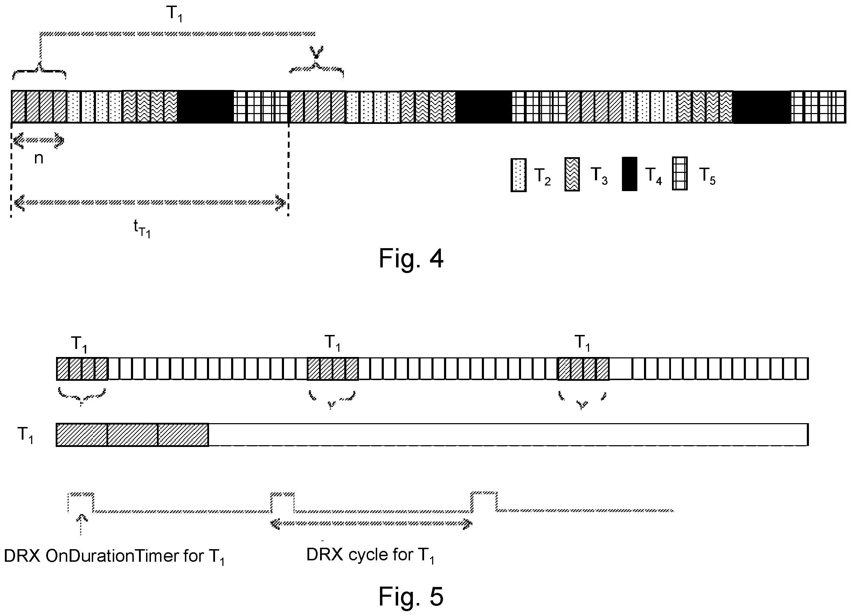

**Figure 4** illustrates an example of how transmission resources, such as, e.g. subframes or time slots, may be divided or split into several subsets of transmission resources *T_{N}.* For example, the transmission resources may be divided into N number of subsets of transmission resources. The subsets may also be referred to herein as communication threads. The example in Figure 4 shows the transmission resources divided into 5 different subsets or communication threads *T₁-T₅.* For the subset or communication thread *T₁*, indicated by the dashed subframes in Figure 4, *n* here indicates the amount of transmission resources, e.g. time slots or subframes, comprised in each reoccurring occasion of the subset or communication thread *T₁.* Also, *t_{T1}* here indicate the periodicity of the re-occurring occasions in the subset or communication thread *T₁.*

It should be noted that n and *t_{T1}*, as well as, the short on-duration time periods (e.g. according to a DRX OnDurationTimer), may be individual and specific for each subset or communication thread. This means that these values may differ between the different subsets or communication threads *T₁-T₅.* It should also be noted that each subset or communication thread *T₁-T₅* may be self-contained in that UL grants and UL transmissions are comprised within the same subset or communication thread *T₁-T₅.*

**Figure 5** illustrates an example of how transmission resources of a subset of transmission resources *T₁* may be accorded its own DRX procedure. First, the example in Figure 5 shows how the re-occurring occasions of transmission resources are considered as concatenated into a subset or communication thread *T₁.* Secondly, the example in Figure 5 also shows how the subset or communication thread *T₁* may run an independent DRX procedure only applicable to the subset or communication thread *T₁*.

This means that the first node 110, 121 may monitor the transmission resources of each subset or communication thread during the short on-duration time periods of the DRX procedure accorded to each subset or communication thread, respectively. In other words, the first node 110, 121 may monitor the DRX on-duration subframes of each subset or communication thread, e.g. according to individual DRX OnDurationTimers of each subset or communication thread, to determine whether or not activity is detected for the subset or communication thread. Figure 5 shows the DRX OnDurationTimer for the subset or communication thread *T₁,* as well as, the DRX cycle for the subset or communication thread *T₁* according to which the short on-duration time periods of the DRX OnDurationTimer re-occurs.

The division of the transmission resources into the subsets of transmission resources, or communication threads, performed by the first node 110, 121 may, for example, be predefined in the standard specification or be configured in the wireless communication network 100. The division of the transmission resources into the subsets of transmission resources, or communication threads, should also be known or communicated to each node, i.e. network node 110, 111, 112, and wireless device 121, 122, 123, in the wireless communications network 100.

### Action 302A

When transmissions are scheduled for the subset of transmission resources on the back-haul link 131, 133, the first node 110, 121 allocates the subset of transmission resources to the back-haul link 131, 133. For example, in the example shown in Figures 4-5, this means that, when there is data activity detected during a short on-duration time period for the subset of transmission resources, or communication thread, then the first node 110, 121 knows that the subset of transmission resources will be used by the third node 112 for the backhaul link 131, 133, e.g. for transmitting DL data to the first node 110, 121 or to transmit a UL grant to the first node 110, 121 and thus schedule the first node 110, 121 for transmissions on the subset of transmission resources. The latter may, for example, be for a determined time period, such as, a time period according to a DRX InactivityTimer coupled to the subset of transmission resources, or communication thread. Hence, the first node 110, 121 here reserves and allocates the subset of transmission resources, or communication thread, for communication with the third node 112 on the backhaul link 131, 133.

### Action 302B

When transmissions are not scheduled for the subset of transmission resources on the back-haul link 131, 133, the first node 110, 121 allocates the subset of transmission resources to the access link 132, 134. For example, in the example shown in Figures 4-5, this means that, when there is no data activity detected during a short on-duration time period for the subset of transmission resources, or communication thread, then the first node 110, 121 knows that the subset of transmission resources will not be used by the third node 112 for the backhaul link 131, 133, and therefore, is free to go into DRX sleep mode within current DRX cycle with regard to the backhaul link 131, 133. Hence, the first node 110, 121 may use the subset of transmission resources for the access link 132, 134, e.g. for transmitting DL data to the at least one second node 111, 122 or to transmit a UL grant to the at least one second node 111, 122 and thus schedule the at least one second node 111, 122 for transmissions on the subset of transmission resources. The latter may, for example, be for a determined time period, such as, a time period according to a DRX InactivityTimer coupled to the subset of transmission resources, or communication thread. Hence, the first node 110, 121 here reserves and allocates the subset of transmission resources, or communication thread, for communication with the at least one second node 111, 122 on the access link 132, 134.

### Action 303

In this optional action, the first node 110, 121 may determine whether or not there is data to be transmitted to or received from the at least one second node 111, 122. In this way, the first node 110, 121 may determine if there is a need for communication with the at least one second node 111, 122 on the access link 132, 134 for the subset of transmission resources.

### Action 303A

When the subset of transmission resources has been allocated to the access link 132, 134 and there is data to be transmitted to or received from the at least one second node 111, 122, the first node 110, 121 may transmit information to the at least one second node 111, 122 on the access link 132, 134 using the subset of transmission resources. For example, in the example shown in Figures 4-5, this means that, when there is data activity detected during a short on-duration time period for the subset of transmission resources, or communication thread, then the first node 110, 121 may be activated into an active state to prepare for data transmission/reception to/from the at least one second node 111, 122 on the access link 132, 134 for the subset of transmission resources, or communication thread.

### Action 303B

When the subset of transmission resources has been allocated to the access link 132, 134 and there is no data to be transmitted to or received from the at least one second node 111, 122, the first node 110, 121 may enter into a low energy state for a determined time period. For example, in the example shown in Figures 4-5, this means that, when no data activity detected during a short on-duration time period for the subset of transmission resources, or communication thread, then the first node 110, 121 may go into a DRX sleep for the subset of transmission resources, or communication thread. The DRX sleep may last until the next short on-duration time period according to the DRX cycle of the subset of transmission resources, or communication thread.

### Action 304

In this optional action, when the first node 110, 121 has transmitted information to the at least one second node 111, 122 on the access link 132, 134 using the subset of transmission resources, the first node 110, 121 may, according to some embodiments, receive information, from the at least one second node 111, 122 on the access link 132, 134, using the subset of transmission resources when the transmitted information comprised an uplink transmission grant. This enables the first node 110, 121 to receive UL data from the at least one second node 111, 122 on the access link 132, 134 using the subset of transmission resources.

In this case, the received information may comprise a transmission buffer status indication for pending transmissions from the at least one second node 111, 122 to the first node 110, 121 on the access link 132, 134. This advantageously enables the first node 110, 121 to receive information about the transmission resource utilization of the at least one second node 111, 122, i.e. the transmission buffer status indication of the at least one second node 111, 122. This may indicate how much data or information that the at least one second node 111, 122 currently has to transmit. The transmission buffer status indication may be used by the first node 110, 121 to determine the need for communication with the at least one second node 111, 122 on the access link 132, 134 for the subset of transmission resources.

### Action 305

According to some embodiments, the first node 110, 121 may optionally transmit, to the third node 112, 111 on the back-haul link 131, 133 using the subset of transmission resources when the subset of transmission resources has been allocated to the back-haul link 131, 133, a transmission buffer status indication for pending transmissions from the first node 110, 121 to the at least one second node 111, 122 on the access link 132, 134. This enables the first node 110, 121 to inform the third node 112 of its transmission buffer status indication. This may be performed to indicate how much data or information that the first node 110, 121 currently has to transmit. The transmission buffer status indication may then be used by the third node 112 to determine the need for communication with the first node 110, 121 on the back-haul link 131, 133 for the subset of transmission resources, or communication thread.

In according to some embodiments, the first node 110, 121 may also determine the number of subsets of transmission resources in the set of transmission resources that is to be used for the access link 132, 134 based on the received transmission buffer status indication and/or a transmission buffer status indication for pending transmissions from the first node 110, 121 to the at least one second node 111, 122 on the access link 132, 134. This means that the first node 110, 121 may, for example, when determining that its own transmission buffer size is large compared to the transmission buffer size of the at least one second node 111, 122, i.e. via the received transmission buffer status indication, attempt to use more than the current number of subsets of transmission resources, or communication threads, for its own transmissions. In this case, the transmission resources available to the at least one second node 111, 122 will be reduced. Alternatively, the first node 110, 121 may, for example, when determining that its own transmission buffer size is small compared to the transmission buffer size of the at least one second node 111, 122, attempt to use less than the current number of subsets of transmission resources, or communication threads, for its own transmissions. In this case, the transmission resources available to the at least one second node 111, 122 will be increased.

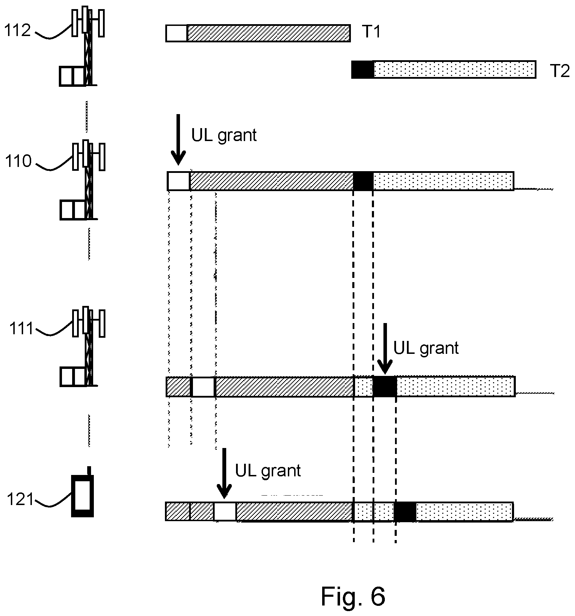

**Figure 6** illustrates how a first subset of transmission resources T1, or communication thread, and a second subset of transmission resources T2, or communication thread, may be shared dynamically according to embodiments of a first node in the wireless communications network 100. In this example, the first node may be the first network node 110, the second network node 111 and the wireless device 121.

In this example, an UL grant is received by the first network node 110 from the third network node 112 on its backhaul link 131 during its short on-duration time period, e.g. DRX OnDurationTimer, for the first subset of transmission resources T1. The short on-duration time period is indicated in Figure 6 by the blank portion in the first subset of transmission resources T1 for the first network node 110. This will activate the first network node 110 into an active state, e.g. start its DRX InactivityTimer and a DRX shortCycleTimer for the first subset of transmission resources T1. This also means that the first network node 110 will not schedule the first subset of transmission resources T1 for transmissions on its access link 132 to the second network node 111, i.e. since it is allocated for transmissions on its backhaul link 131. Furthermore, an UL grant is not received by the first network node 110 from the third network node 112 on its backhaul link 131 during its short on-duration time period, e.g. DRX OnDurationTimer, for the second subset of transmission resources T2. The short on-duration time period is indicated in Figure 6 by the black portion in the second subset of transmission resources T2 for the first network node 110. This means that the first network node 110 is free to schedule the second subset of transmission resources T2 for transmissions on its access link 132 to the second network node 111, i.e. since it is not allocated for transmissions on its backhaul link 131.

For the second network node 111, no UL grant is received from the first network node 111 on its backhaul link 132 during its short on-duration time period, e.g. DRX OnDurationTimer, for the first subset of transmission resources T1. The short on-duration time period is indicated in Figure 6 by the blank portion in the first subset of transmission resources T1 for the second network node 111. This means that the second network node 111 is free to schedule the first subset of transmission resources T1 for transmissions on the access link 133 to the first wireless device 121, i.e. since it is not allocated for transmissions on its backhaul link 132. Furthermore, a UL grant is received by the second network node 111 from the first network node 110 on its backhaul link 132 during its short on-duration time period, e.g. DRX OnDurationTimer, for the second subset of transmission resources T2. The short on-duration time period is indicated in Figure 6 by the black portion in the second subset of transmission resources T2 for the second network node 111. This will activate the second network node 111 into an active state, e.g. start its DRX InactivityTimer and a DRX shortCycleTimer for the second subset of transmission resources T2. This also means that the second network node 111 will not schedule the second subset of transmission resources T2 for transmissions on its access link 133 to the first wireless device 121, i.e. since it is allocated for transmissions on its backhaul link 132.

For the first wireless device 121, an UL grant is received from the second network node 111 on its backhaul link 133 during its short on-duration time period, e.g. DRX OnDurationTimer, for the first subset of transmission resources T1. The short on-duration time period is indicated in Figure 6 by the blank portion in the first subset of transmission resources T1 for the first wireless device 121. This will activate the first wireless device 121 into an active state, e.g. start its DRX InactivityTimer and a DRX shortCycleTimer for the first subset of transmission resources T1. This also means that the first wireless device 121 will not schedule the first subset of transmission resources T1 for transmissions on any potential access link (not shown in Figure 6), for example, an access link 134 to the second wireless device 122 in the wireless communications network 110 in Figure 1. Furthermore, no UL grant is received from the second network node 111 on its backhaul link 133 during its short on-duration time period, e.g. DRX OnDurationTimer, for the second subset of transmission resources T2. The short on-duration time period is indicated in Figure 6 by the blank portion in the second subset of transmission resources T2 for the first wireless device 121. This means that the first wireless device 121 is free to schedule the second subset of transmission resources T2 for transmissions on any potential access link (not shown in Figure 6), for example, an access link 134 to the second wireless device 122 in the wireless communications network 110 in Figure 1.

From the above it may be seen that how a dynamic resource sharing between an access link and a backhaul link for multiple first nodes in a multi-hop self-backhaul wireless communications network according to the embodiments herein may be implemented.

Also, the first network node 110 may report its buffer status information to the third network node 112, e.g. by transmitting a transmission buffer status indication on the UL of its backhaul link 131. This means that, when the third network node 112 detects that there is more traffic, e.g. data to be transmitted, at the third network node 112 than at the first network node 110, the first network node 112 may use both the first subset of transmission resources T1 and the second subset of transmission resources T2. However, when the third network node 112 detects that there is more traffic at the first network node 110 than at the third network node 112, the first network node 112 may, for example, only use only the first subset of transmission resources T1 and leave the second subset of transmission resources T2 to be used by the first network node 110. In other words, the first network node 112 may determine to use a less number of subsets of transmission resources, or communication threads, in this case.

Furthermore, a first node, e.g. the first network node 110, the second network node 111, and the first wireless device 121, may normally monitor the short on-duration time periods of all subsets of transmission resources in order to determine if and when it may allocate the subsets of the transmission resources to its access link instead of its back-haul link. However, if power savings are needed in the first node, the first node may be configured to only monitor the short on-duration time periods of some of the subsets of transmission resources. In this case, explicit signaling may be needed to notify the first node when to monitor which subsets of transmission resources.

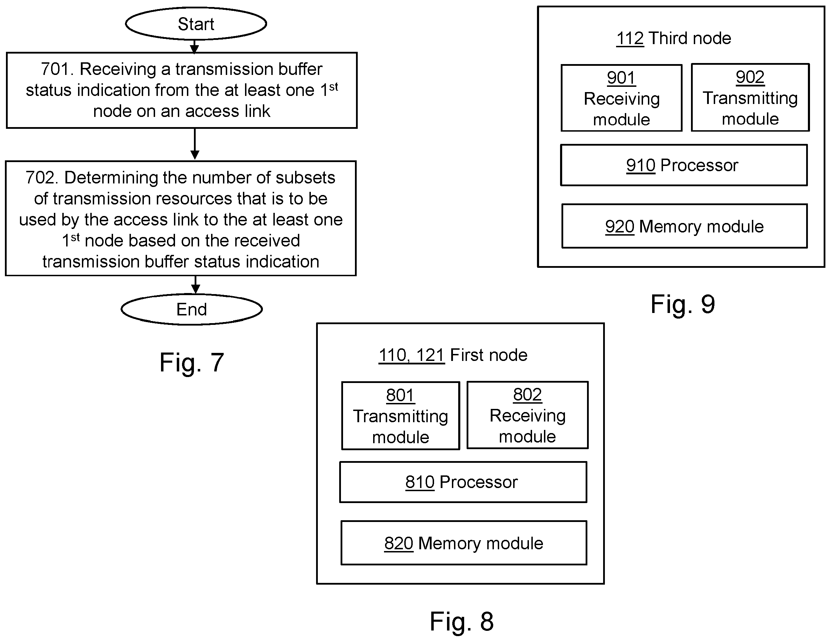

Example of embodiments of a method performed by a third node 112 for determining a number of subsets of transmission resources used by a first access link 131 to at least one first node 110 in a wireless communications network 100, will now be described with reference to the flowchart depicted in Figure 7. The transmission resources in the wireless communications network 100 is shared between the first access link 131 and at least one second access link 132 of the at least one first node 110. Figure 7 illustrates an example of actions or operations which may be taken by the first wireless device 121. The method may comprise the following actions.

### Action 700

The third node 112 receives, from the at least one first node 110, a transmission buffer status indication for pending transmissions from the at least one first node 110 on the at least one second access link 132. This may advantageously enables the third node 112 to be informed about the need for transmission of the first node 110 via the received transmission buffer status indication.

### Action 701

After receiving the buffer status indication from the first node 110, the third node 112 may determine the number of subsets of transmission resources that is to be used by the first access link 131 to the at least one first node 110 based on the received transmission buffer status indication. This means that the third node 112 may determine a suitable number of subsets of transmission resources to use for its own transmissions to the first node 110 by looking at the need for transmissions of the first node 110, i.e. via the received transmission buffer status indication.

In some embodiments, the third node 112 may determine the number of subsets of transmission resources that is to be used by the first access link 131 to the at least one first node 110 further based on a transmission buffer status indication for pending transmissions from the third node 112 to the first node 110 on the access link 131. This means that when determining that its transmission buffer size is large compared to the transmission buffer size of the first node 110, i.e. via the received transmission buffer status indication, the third node 112 may determine to use more than the current number of subsets of transmission resources for its own transmissions since the need for transmission resources in the first node 110 is less than in the third node 112. Alternatively, when determining that its transmission buffer size is small compared to the transmission buffer size of the first node 110, the third node 112 may determine to use less than the current number of subsets of transmission resources for its own transmissions since the need for transmission resources in the first node 110 is higher than in the third node 112.

To perform the method actions for allocating a subset of transmission resources that are shared between an access link 132, 134 and a back-haul link 131, 133, the first node 110, 121 may comprise the following arrangement depicted in Figure 8.

**Figure 8** shows a schematic block diagram of embodiments of the first node 110, 121. In some embodiments, the first node 110, 121 may comprise a **transmitting module 801,** a **receiving module 802,** and a **processor 810.** The transmitting module 801 may also be referred to as transmitter or transmitting unit. The receiving module 802 may also be referred to as a receiver or receiving unit. The processor 810 may also be referred to as processing module, processing unit or processing circuitry. The processor 810 also controls the transmitter 801 and the receiver 802. Optionally, the processor 810 may be said to comprise one or more of the transmitter 801 and the receiver 802 and/or perform the function thereof as described below.

The processor 810 is configured to determine whether or not transmissions are scheduled for the subset of transmission resources on the back-haul link 131, 133. Also, the processor 810 is configured to allocate the subset of transmission resources to the back-haul link 131, 133 when transmissions are scheduled for the subset of transmission resources on the back-haul link 131, 133, and to allocate the subset of transmission resources to the access link 132, 134 when transmissions are not scheduled for the subset of transmission resources on the back-haul link 131, 133.

According to some embodiments, the access link 132, 134 may be used by the first node 110, 121 to provide access to the wireless communications network 100 to at least one second node 111, 122, whereas the back-haul link 131, 133 may be used by the first node 110, 121 to access the wireless communications network 100 via a third node 112, 111.

In some embodiments, the processor 810 may be further configured to determine whether or not there is data to be transmitted to or received from the at least one second node 111, 122. When there is data to be transmitted to or received from the at least one second node 111, 122, the transmitter 801 may be configured to transmit information to the at least one second node 111, 122 on the access link 132, 134 using the subset of transmission resources. In this case, the receiver 802 may be configured to receive information from the at least one second node 111, 122 on the access link 132, 134 using the subset of transmission resources when the transmitted information comprise an uplink transmission grant. The received information may here comprise a transmission buffer status indication for pending transmissions from the at least one second node 111, 122 to the first node 110, 121 on the access link 132, 134. Alternatively, when there is no data to be transmitted to or received from the at least one second node 111, 122, the processor 810 may be configured to enter the first node 110, 121 into a low energy state for a determined time period.

In some embodiments, the processor 810 may be further configured to continuously determine whether or not transmissions are scheduled for the subset of transmission resources on the back-haul link 131, 133, and allocate the subset of transmission resources to the back-haul link 131, 133 when transmissions are scheduled for the subset of transmission resources on the back-haul link 131, 133 and to the access link 132, 134 when transmissions are not scheduled for the subset of transmission resources on the back-haul link 131, 133. This determining and allocating may be performed by the processor 810 at determined time periods according to a Discontinuous Reception, DRX, timer coupled to the subset of transmission resources in the first node 110, 121.

The transmitter 801 may, in some embodiments, be further configured to to transmit, to the third node 112, 111 on the back-haul link 131, 133 using the subset of transmission resources when the subset of transmission resources has been allocated to the back-haul link 131, 133, a transmission buffer status indication for pending transmissions from the first node 110, 121 to the at least one second node 111, 122 on the access link 132, 134.

In some embodiments, the subset of transmission resources is one of at least two subsets of transmission resources comprised in a set of transmission resources shared between the access link 132, 134 and the back-haul link 131, 133. In this case, the processor 810 may be further configured to determine the number of subsets of transmission resources in the set of transmission resources that is to be used for the access link 132, 134 based on the received transmission buffer status indication and/or a transmission buffer status indication for pending transmissions from the first node 110, 121 to the at least one second node 111, 122 on the access link 132, 134.

In some embodiments, the at least one subset of transmission resources forms a communication thread for which the transmitter 801 and/or receiver 802 may communicate downlink and/or uplink transmission grant information and perform corresponding downlink and/or uplink transmissions. In some embodiments, the transmission resources are subframes or time-slots in the wireless communications network 100.

The embodiments for allocating a subset of transmission resources that are shared between an access link 132, 134 and a back-haul link 131, 133 may be implemented through one or more processors, such as, e.g. the processor 810 in the first node 110, 121 depicted in Figure 8, together with computer program code for performing the functions and actions of the embodiments herein. The program code mentioned above may also be provided as a computer program product, for instance in the form of a data carrier carrying computer program code or code means for performing the embodiments herein when being loaded into the processor 810 in the first node 110, 121. The computer program code may e.g. be provided as pure program code in the first node 110, 121 or on a server and downloaded to the first node 110, 121. The carrier may be one of an electronic signal, optical signal, radio signal, or computer-readable storage medium, such as, e.g. electronic memories like a RAM, a ROM, a Flash memory, a magnetic tape, a CD-ROM, a DVD, a Blueray disc, etc.

The first node 110, 121 may further comprise a **memory 820,** which may be referred to or comprise one or more memory modules or units. The memory 820 may be arranged to be used to store executable instructions and data to perform the methods described herein when being executed in or by the processor 810 of the first node 110, 121. Those skilled in the art will also appreciate that the processor 810 and the memory 820 described above may refer to a combination of analog and digital circuits, and/or one or more processors configured with software and/or firmware, e.g. stored in the memory 820, that when executed by the one or more processors, such as, the processor 810, cause the one or more processors to perform the method as described above. The processor 810 and the memory 820 may also be referred to as processing means. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

From the above it may be seen that some embodiments may comprise a computer program product, comprising instructions which, when executed on at least one processor, e.g. the processor 810, cause the at least one processor to carry out the method for allocating a subset of transmission resources that are shared between an access link 132, 134 and a back-haul link 131, 133. Also, some embodiments may further comprise a carrier containing said computer program product, wherein the carrier is one of an electronic signal, optical signal, radio signal, or computer-readable storage medium.

To perform the method actions for determining a number of subsets of transmission resources used by a first access link 131 to at least one first node 110 in a wireless communications network 100, wherein transmission resources in the wireless communications network 100 is shared between the first access link 131 and at least one second access link 132 of the at least one first node 110, the third node 112 may comprise the following arrangement depicted in Figure 9.

**Figure 9** shows a schematic block diagram of embodiments of the third node 112. In some embodiments, the third node 112 may comprise a **receiving module 901,** a **transmitting module 902,** and a **processor 910.** The receiving module 901 may also be referred to as a receiver or receiving unit. The transmitting module 902 may also be referred to as transmitter or transmitting unit. The processor 910 may also be referred to as processing module, processing unit or processing circuitry. The processor 910 may control the receiver 901 and the transmitter 902. Optionally, the processor 910 may be said to comprise one or more of the receiver 901 and the transmitter 902, and/or perform the function thereof as described below.

The receiver 901 is configured to receive, from the at least one first node 110, a transmission buffer status indication for pending transmissions from the at least one first node 110 on the at least one second access link 132. The processor 910 is configured to determine the number of subsets of transmission resources that is to be used by the first access link 131 to the at least one first node 110 based on the received transmission buffer status indication. In some embodiments, the processor 910 is further configured to determine the number of subsets of transmission resources further based on a transmission buffer status indication for pending transmissions from the third node 112 to the first node 110 on the access link 131.

The embodiments for determining a number of subsets of transmission resources used by a first access link 131 to at least one first node 110 in a wireless communications network 100, wherein transmission resources in the wireless communications network 100 is shared between the first access link 131 and at least one second access link 132 of the at least one first node 110, may be implemented through one or more processors, such as, e.g. the processor 910 in the third node 112 depicted in Figure 10, together with computer program code for performing the functions and actions of the embodiments herein. The program code mentioned above may also be provided as a computer program product, for instance in the form of a data carrier carrying computer program code or code means for performing the embodiments herein when being loaded into the processor 910 in the third node 112. The computer program code may e.g. be provided as pure program code the third node 112 or on a server and downloaded to the third node 112. The carrier may be one of an electronic signal, optical signal, radio signal, or computer-readable storage medium, such as, e.g. electronic memories like a RAM, a ROM, a Flash memory, a magnetic tape, a CD-ROM, a DVD, a Blueray disc, etc.

The third node 112 may further comprise a **memory 920,** which may be referred to or comprise one or more memory modules or units. The memory 920 may be arranged to be used to store executable instructions and data to perform the methods described herein when being executed in or by the processor 910 of the third node 112. Those skilled in the art will also appreciate that the processor 910 and the memory 920 described above may refer to a combination of analog and digital circuits, and/or one or more processors configured with software and/or firmware, e.g. stored in the memory 920, that when executed by the one or more processors, such as, the processor 910, cause the one or more processors to perform the method as described above. The processor 910 and the memory 920 may also be referred to as processing means. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

From the above it may be seen that some embodiments may comprise a computer program product, comprising instructions which, when executed on at least one processor, e.g. the processor 910, cause the at least one processor to carry out the method for determining a number of subsets of transmission resources used by a first access link 131 to at least one first node 110 in a wireless communications network 100, wherein transmission resources in the wireless communications network 100 is shared between the first access link 131 and at least one second access link 132 of the at least one first node 110. Also, some embodiments may further comprise a carrier containing said computer program product, wherein the carrier is one of an electronic signal, optical signal, radio signal, or computer-readable storage medium.

The terminology used in the detailed description of the particular embodiments illustrated in the accompanying drawings is not intended to be limiting of the described first node 110, 121 and third node 112, and methods therein, which instead should be construed in view of the enclosed claims.

As used herein, the term "and/or" comprises any and all combinations of one or more of the associated listed items.

Further, as used herein, the common abbreviation "e.g.", which derives from the Latin phrase "exempli gratia," may be used to introduce or specify a general example or examples of a previously mentioned item, and is not intended to be limiting of such item.

If used herein, the common abbreviation "i.e.", which derives from the Latin phrase "id est," may be used to specify a particular item from a more general recitation. The common abbreviation "etc.", which derives from the Latin expression "et cetera" meaning "and other things" or "and so on" may have been used herein to indicate that further features, similar to the ones that have just been enumerated, exist.

As used herein, the singular forms "a", "an" and "the" are intended to comprise also the plural forms as well, unless expressly stated otherwise. It will be further understood that the terms "includes," "comprises," "including" and/or "comprising," when used in this specification, specify the presence of stated features, actions, integers, steps, operations, elements, and/or components, but do not preclude the presence or addition of one or more other features, actions, integers, steps, operations, elements, components, and/or groups thereof.

Unless otherwise defined, all terms comprising technical and scientific terms used herein have the same meaning as commonly understood by one of ordinary skill in the art to which the described embodiments belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

## Claims

1. A method performed by a first node (110; 121) in a wireless communications network (100) for allocating a subset of transmission resources that are shared between an access link (132; 134) and a back-haul link (131; 133), the method comprising:
*determining* (301) whether or not transmissions are scheduled for the subset of transmission resources on the back-haul link (131; 133), wherein the *determining* (301) is continuously performed at determined time periods according to a Discontinuous Reception, DRX, timer coupled to the subset of transmission resources in the first node (110; 121);
*allocating* (302A) the subset of transmission resources to the back-haul link (131; 133) when transmissions are scheduled for the subset of transmission resources on the back-haul link (131; 133); and
*allocating* (302B) the subset of transmission resources to the access link (132; 134) when transmissions are not scheduled for the subset of transmission resources on the back-haul link (131; 133).

2. The method according to claim 1, wherein the access link (132; 134) is used by the first node (110; 121) to provide access to the wireless communications network (100) to at least one second node (111; 122) and the back-haul link (131; 133) is used by the first node (110; 121) to access the wireless communications network (100) via a third node (112; 111).

3. The method according to claim 1 or 2, further comprising:
*determining* (303) whether or not there is data to be transmitted to or received from the at least one second node (111; 122) when the subset of transmission resources has been allocated to the access link (132; 134).

4. The method according to claim 3, further comprising:
*transmitting* (303A) information to the at least one second node (111; 122) on the access link (132; 134) using the subset of transmission resources when there is data to be transmitted to or received from the at least one second node (111; 122).

5. The method according to claim 4, further comprising *receiving* (304) information from the at least one second node (111; 122) on the access link (132; 134) using the subset of transmission resources when the transmitted information comprises an uplink transmission grant.

6. The method according to claim 5, wherein the received information comprises a transmission buffer status indication for pending transmissions from the at least one second node (111; 122) to the first node (110; 121) on the access link (132; 134).

7. The method according to claim 3, further comprising:
*entering* (303B) into a low energy state for a determined time period when there is no data to be transmitted to or received from the at least one second node (111; 122).

8. The method according to any of claims 1-7, further comprising:
*transmitting* (305), to the third node (112; 111) on the back-haul link (131; 133) using the subset of transmission resources when the subset of transmission resources has been allocated to the back-haul link (131; 133), a transmission buffer status indication for pending transmissions from the first node (110; 121) to the at least one second node (111; 122) on the access link (132; 134).

9. The method according to any of claims 1-8, wherein the subset of transmission resources is one of at least two subsets of transmission resources comprised in a set of transmission resources shared between the access link (132; 134) and the back-haul link (131; 133).

10. The method according to claim 9, further comprising determining the number of subsets of transmission resources in the set of transmission resources that is to be used for the access link (132; 134) based on a received transmission buffer status indication and/or the transmission buffer status indication for the pending transmissions from the first node (110; 121) to the at least one second node (111; 122) on the access link (132; 134).

11. A first node (110; 121) in a wireless communications network (100) for allocating a subset of transmission resources that are shared between an access link (132; 134) and a back-haul link (131; 133), the first node (110; 121) comprising a processor (810) configured to:
determine whether or not transmissions are scheduled for the subset of transmission resources on the back-haul link (131; 133), wherein the determination is continuously performed at determined time periods according to a Discontinuous Reception, DRX, timer coupled to the subset of transmission resources in the first node (110; 121);
allocate the subset of transmission resources to the back-haul link (131; 133) when transmissions are scheduled for the subset of transmission resources on the back-haul link (131; 133); and
allocate the subset of transmission resources to the access link (132; 134) when transmissions are not scheduled for the subset of transmission resources on the back-haul link (131; 133).

12. A computer program product, comprising instructions which, when executed on at least one processor (810; 910), cause the at least one processor (810; 910) to carry out the method according to any of claims 1-10.

## Patentansprüche

1. Verfahren, das von einem ersten Knoten (110; 121) in einem drahtlosen Kommunikationsnetzwerk (100) durchgeführt wird, um eine Teilmenge von Übertragungsressourcen zuzuweisen, die eine Zugangsverknüpfung (132; 134) und eine Backhaul-Verknüpfung (131; 133) teilen, wobei das Verfahren Folgendes umfasst:
*Bestimmen* (301), ob Übertragungen für die Teilmenge von Übertragungsressourcen an der Backhaul-Verknüpfung (131; 133) geplant sind oder nicht, wobei das *Bestimmen* (301) kontinuierlich in bestimmten Zeiträumen gemäß einem Timer für den diskontinuierlichen Empfang, DRX, durchgeführt wird, der an die Teilmenge von Übertragungsressourcen in dem ersten Knoten (110; 121) gekoppelt ist;
*Zuweisen* (302A) der Teilmenge von Übertragungsressourcen zu der Backhaul-Verknüpfung (131; 133), wenn Übertragungen für die Teilmenge von Übertragungsressourcen an der Backhaul-Verknüpfung (131; 133) geplant sind; und
*Zuweisen* (302B) der Teilmenge von Übertragungsressourcen zu der Zugangsverknüpfung (132; 134), wenn Übertragungen für die Teilmenge von Übertragungsressourcen an der Backhaul-Verknüpfung (131; 133) nicht geplant sind.

2. Verfahren nach Anspruch 1, wobei die Zugangsverknüpfung (132; 134) von dem ersten Knoten (110; 121) verwendet wird, um einen Zugang zu dem drahtlosen Kommunikationsnetzwerk (100) für mindestens einen zweiten Knoten (111; 122) bereitzustellen und die Backhaul-Verknüpfung (131; 133) von dem ersten Knoten (110; 121) verwendet wird, um auf das drahtlose Kommunikationsnetzwerk (100) über einen dritten Knoten (112; 111) zuzugreifen.

3. Verfahren nach Anspruch 1 oder 2, ferner umfassend:
*Bestimmen* (303), ob Daten vorliegen, die zu dem mindestens einen zweiten Knoten (111; 122) übertragen oder von diesem empfangen werden sollen, oder nicht, wenn die Teilmenge von Übertragungsressourcen der Zugangsverknüpfung (132; 134) zugewiesen wurde.

4. Verfahren nach Anspruch 3, ferner umfassend:
*Übertragen* (303A) von Informationen zu dem mindestens einen zweiten Knoten (111; 122) an der Zugangsverknüpfung (132; 134) unter Verwendung der Teilmenge von Übertragungsressourcen, wenn Daten vorliegen, die zu dem mindestens einen zweiten Knoten (111; 122) übertragen oder von diesem empfangen werden sollen.

5. Verfahren nach Anspruch 4, ferner umfassend das *Empfangen* (304) von Informationen von dem mindestens einen zweiten Knoten (111; 122) an der Zugangsverknüpfung (132; 134) unter Verwendung der Teilmenge von Übertragungsressourcen, wenn die übertragenen Informationen eine Uplink-Übertragungsgewährung umfassen.

6. Verfahren nach Anspruch 5, wobei die empfangenen Informationen eine Übertragungspufferstatusanzeige für anstehende Übertragungen von dem mindestens einen zweiten Knoten (111; 122) zu dem ersten Knoten (110; 121) an der Zugangsverknüpfung (132; 134) umfassen.

7. Verfahren nach Anspruch 3, ferner umfassend:
*Übergehen* (303B) in einen energiearmen Zustand für einen bestimmten Zeitraum, wenn keine Daten zu dem mindestens einen zweiten Knoten (111; 122) übertragen oder von diesem empfangen werden sollen.

8. Verfahren nach einem der Ansprüche 1-7, ferner umfassend:
*Übertragen* (305), zu dem dritten Knoten (112; 111) an der Backhaul-Verknüpfung (131; 133) unter Verwendung der Teilmenge von Übertragungsressourcen, wenn die Teilmenge von Übertragungsressourcen der Backhaul-Verknüpfung (131; 133) zugewiesen wurde, einer Übertragungspufferstatusanzeige für anstehende Übertragungen von dem ersten Knoten (110; 121) zu dem mindestens einen zweiten Knoten (111; 122) an der Zugangsverknüpfung (132; 134).

9. Verfahren nach einem der Ansprüche 1-8, wobei die Teilmenge von Übertragungsressourcen einer von mindestens zwei Teilmengen von Übertragungsressourcen entspricht, die in einem Satz von Übertragungsressourcen enthalten sind, die die Zugangsverknüpfung (132; 134) und die Backhaul-Verknüpfung (131; 133) teilen.

10. Verfahren nach Anspruch 9, ferner umfassend das Bestimmen der Anzahl von Teilmengen von Übertragungsressourcen in dem Satz von Übertragungsressourcen, der für die Zugangsverknüpfung (132; 134) verwendet werden soll, auf Grundlage einer empfangenen Übertragungspufferstatusanzeige und/oder der Übertragungspufferstatusanzeige für die anstehenden Übertragungen von dem ersten Knoten (110; 121) zu dem mindestens einen zweiten Knoten (111; 122) an der Zugangsverknüpfung (132; 134) .

11. Erster Knoten (110; 121) in einem drahtlosen Kommunikationsnetzwerk (100) zum Zuweisen einer Teilmenge von Übertragungsressourcen, die eine Zugangsverknüpfung (132; 134) und eine Backhaul-Verknüpfung (131; 133) teilen, wobei der erste Knoten (110; 121) einen Prozessor (810) umfasst, der zu Folgendem konfiguriert ist:
Bestimmen, ob Übertragungen für die Teilmenge von Übertragungsressourcen an der Backhaul-Verknüpfung (131; 133) geplant sind oder nicht, wobei die Bestimmung kontinuierlich in bestimmten Zeiträumen gemäß einem Timer für den diskontinuierlichen Empfang, DRX, durchgeführt wird, der an die Teilmenge von Übertragungsressourcen in dem ersten Knoten (110; 121) gekoppelt ist;
Zuweisen der Teilmenge von Übertragungsressourcen zu der Backhaul-Verknüpfung (131; 133), wenn Übertragungen für die Teilmenge von Übertragungsressourcen an der Backhaul-Verknüpfung (131; 133) geplant sind; und
Zuweisen der Teilmenge von Übertragungsressourcen zu der Zugangsverknüpfung (132; 134), wenn Übertragungen für die Teilmenge von Übertragungsressourcen an der Backhaul-Verknüpfung (131; 133) nicht geplant sind.

12. Computerprogrammprodukt, umfassend Anweisungen, die, wenn sie in mindestens einem Prozessor (810; 910) ausgeführt werden, veranlassen, dass der mindestens eine Prozessor (810; 910) das Verfahren nach einem der Ansprüche 1-10 ausführt.

## Revendications

1. Procédé réalisé par un premier nœud (110 ; 121) dans un réseau de télécommunication sans fil (100) pour attribuer un sous-ensemble de ressources de transmission qui sont partagées entre une liaison d'accès (132 ; 134) et une liaison de backhaul (131 ; 133), le procédé comprenant :
la *détermination* (301) du fait que des transmissions sont ou ne sont pas programmées pour le sous-ensemble de ressources de transmission sur la liaison de back-haul (131 ; 133), dans lequel la *détermination* (301) est réalisée de manière continue à des périodes de temps déterminées selon un temporisateur de réception discontinue, DRX, couplé au sous-ensemble de ressources de transmission dans le premier nœud (110 ; 121) ;
*l'attribution* (302A) du sous-ensemble de ressources de transmission à la liaison de back-haul (131 ; 133) lorsque des transmissions sont programmées pour le sous-ensemble de ressources de transmission sur la liaison de back-haul (131 ; 133) ; et
*l'attribution* (302B) du sous-ensemble de ressources de transmission à la liaison d'accès (132 ; 134) lorsque des transmissions ne sont pas programmées pour le sous-ensemble de ressources de transmission sur la liaison de back-haul (131 ; 133) .

2. Procédé selon la revendication 1, dans lequel la liaison d'accès (132 ; 134) est utilisée par le premier nœud (110 ; 121) pour fournir un accès au réseau de télécommunication sans fil (100) à au moins un deuxième nœud (111 ; 122) et la liaison de back-haul (131 ; 133) est utilisée par le premier nœud (110 ; 121) pour accéder au réseau de télécommunication sans fil (100) via un troisième nœud (112 ; 111).

3. Procédé selon la revendication 1 ou 2, comprenant en outre :
la *détermination* (303) du fait qu'il y a ou non des données à transmettre à ou à recevoir de l'au moins un deuxième nœud (111 ; 122) lorsque le sous-ensemble de ressources de transmission a été attribué à la liaison d'accès (132 ; 134).

4. Procédé selon la revendication 3, comprenant en outre :
la *transmission* (303A) d'informations à l'au moins un deuxième nœud (111 ; 122) sur la liaison d'accès (132 ; 134) à l'aide du sous-ensemble de ressources de transmission lorsqu'il y a des données à transmettre à ou à recevoir de l'au moins un deuxième nœud (111 ; 122).

5. Procédé selon la revendication 4, comprenant en outre la *réception* (304) d'informations à partir de l'au moins un deuxième nœud (111 ; 122) sur la liaison d'accès (132 ; 134) à l'aide du sous-ensemble de ressources de transmission lorsque les informations transmises comprennent un accord de transmission en liaison montante.

6. Procédé selon la revendication 5, dans lequel les informations reçues comprennent une indication de statut de tampon de transmission pour des transmissions en attente à partir de l'au moins un deuxième nœud (111 ; 122) vers le premier nœud (110 ; 121) sur la liaison d'accès (132 ; 134).

7. Procédé selon la revendication 3, comprenant en outre :
*l'entrée* (303B) dans un état de faible énergie pendant une période de temps déterminée lorsqu'il n'y a pas de données à transmettre à ou à recevoir de l'au moins un deuxième nœud (111 ; 122) .

8. Procédé selon l'une quelconque des revendications 1 à 7, comprenant en outre :
la *transmission* (305), au troisième nœud (112 ; 111) sur la liaison de back-haul (131 ; 133) à l'aide du sous-ensemble de ressources de transmission lorsque le sous-ensemble de ressources de transmission a été attribué à la liaison de backhaul (131 ; 133), d'une indication de statut de tampon de transmission pour des transmissions en attente à partir du premier nœud (110 ; 121) vers l'au moins un deuxième nœud (111 ; 122) sur la liaison d'accès (132 ; 134).

9. Procédé selon l'une quelconque des revendications 1 à 8, dans lequel le sous-ensemble de ressources de transmission est l'un d'au moins deux sous-ensembles de ressources de transmission compris dans un ensemble de ressources de transmission partagées entre la liaison d'accès (132 ; 134) et la liaison de back-haul (131 ; 133).

10. Procédé selon la revendication 9, comprenant en outre la détermination du nombre de sous-ensembles de ressources de transmission dans l'ensemble de ressources de transmission qui doit être utilisé pour la liaison d'accès (132 ; 134) sur la base d'une indication de statut de tampon de transmission reçue et/ou de l'indication de statut de tampon de transmission pour les transmissions en attente à partir du premier nœud (110 ; 121) vers l'au moins un deuxième noud (111 ; 122) sur la liaison d'accès (132 ; 134).

11. Premier nœud (110 ; 121) dans un réseau de télécommunication sans fil (100) pour attribuer un sous-ensemble de ressources de transmission qui sont partagées entre une liaison d'accès (132 ; 134) et une liaison de back-haul (131 ; 133), le premier nœud (110 ; 121) comprenant un processeur (810) configuré pour :
déterminer si des transmissions sont ou ne sont pas programmées pour le sous-ensemble de ressources de transmission sur la liaison de back-haul (131 ; 133), dans lequel la détermination est réalisée de manière continue à des périodes de temps déterminées selon un temporisateur de réception discontinue, DRX, couplé au sous-ensemble de ressources de transmission dans le premier nœud (110 ; 121) ;
attribuer le sous-ensemble de ressources de transmission à la liaison de back-haul (131 ; 133) lorsque des transmissions sont programmées pour le sous-ensemble de ressources de transmissions sur la liaison de back-haul (131 ; 133) ; et
attribuer le sous-ensemble de ressources de transmission à la liaison d'accès (132 ; 134) lorsque des transmissions ne sont pas programmées pour le sous-ensemble de ressources de transmission sur la liaison de back-haul (131 ; 133).

12. Produit de programme informatique, comprenant des instructions qui, lorsqu'elles sont exécutées sur au moins un processeur (810 ; 910), amènent l'au moins un processeur (810 ; 910) à mener à bien le procédé selon l'une quelconque des revendications 1 à 10.
